# EUROPEAN PATENT APPLICATION

(11) **EP 1 398 553 A1**
(43) Date of publication of application: **17.03.2004**
(21) Application number: 03255582.3
(22) Date of filing: 08.09.2003
(51) Int. Cl.: F16L 5/10

(54) **A sealable lead-through system**

(30) Priority: 15.09.2002 IL 15177102
(71) Applicant: Beth-El Zikhron-Ya'aqov Industries, Ltd., Zikhron Yaaqov 30900 (IL)
(72) Inventor: Fuchs, Albrecht, Zikhron Yaaqov 30900 (IL); Schneider, Jonathan, Zikhron Yaaqov 30900 (IL); Koeger, Samuel, Zikhron Yaaqov 30900 (IL)
(74) Representative: Smith, Norman Ian

(57) **Abstract**

The invention provides a sealable lead-through system for a protected space defined by walls, the system including at least one sleeve (6,6',8) made of a flexible material, one end of the sleeve (6,6',8) being tightly attached to the outside of one of the walls, at least one sealing element (10,18,20), approximately fitting the sleeve (6,6',8) and being made of a material deformable in compression, the sealing element (10,18,20) being provided with a bore approximately fitting the size of a transfer member intended to be led from outside the protected space into its interior or *vice-versa*, the sealing element (10,18,20) being adapted to be subjected to a compressive force, for sealing off any interspaces between the transfer member and the bore, and between the sealing element and the sleeve.

## Description

### Field of the Invention

The present invention relates to a sealable lead-through system for shelters protected against nuclear, biological and chemical (NBC) contamination. More particularly, the invention relates to a system for NBC-protected spaces defined by walls, whereby air and water pipes, electric cables, telephone lines, and the like can be led from a contaminated atmosphere into the protected space, or from that space into the atmosphere, without compromising the protective air/gas sealing of the shelter.

### Background of the Invention

The problem of passing cables, pipes and the like through the walls of a protected space, without endangering the atmosphere within that space, has to date not been satisfactorily solved. Typically, a flexible lip, or series of lips, on one or both sides of a sleeve, have been used to achieve some air-tightness by pressing the lip(s) against the flat surfaces of the wall through which the sleeve is passed. However, the wide variety of diameters of cables and pipes in use has made it practically impossible, particularly under battlefield conditions, to completely seal such sleeves. A compromise solution, using sealing compounds such as silicone, grease, vaseline or pitch, has been shown to produce doubtful results with regard to air-tightness, and particularly with regard to gas-tightness. The problem became especially critical when the system had to be reused once or twice and the sealing compound could not be completely removed.

### Disclosure of the Invention

It is thus one of the objects of the present invention to provide a sealing system that is fully reliable, including under field conditions, that is easily and rapidly mounted and dismounted, and that is readily reusable.

According to the invention, the above object is achieved by providing a sealable lead-through system for a protected space defined by walls, the system comprising at least one sleeve made of a flexible material, one end of the sleeve being tightly attached to the outside of at least one of the walls; at least one sealing element, at least approximately fitting the sleeve and being made of a material deformable in compression, the sealing element being provided with a bore at least approximately fitting the size of a transfer means intended to be led from outside the protected space into its interior or *vice-versa;* the sealing element being adapted to be subjected to a compressive force, for sealing off any interspaces between the transfer means and the bore, and between the sealing element and the sleeve.

The invention further provides a sealable, lead-through system for a protected space defined by walls, the system comprising at least one sleeve made of a flexible material, one end of the sleeve being tightly attached to the outside of at least one of the walls; at least one sealing element, at least approximately fitting the sleeve and being made of a material deformable in compression, the sealing element being provided with a longitudinal slit extending along its entire length and reaching in depth to about the axis of the element, for accommodating a transfer means intended to be led from the outside of the protected space into its interior, or *vice-versa;* the sealing element being adapted to be subjected to a compressive force, for sealing off any interspaces between the transfer means and the slit, and between the sealing element and the sleeve.

### Brief Description of the Drawings

The invention will now be described in connection with certain preferred embodiments with reference to the following illustrative figures, so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
- Fig. 1: is a schematic representation of a protected space provided with the system according to the present invention;
- Fig. 2: is an enlarged cross-sectional view, along plane II-II, of the system of Fig. 1;
- Fig. 3: illustrates a first embodiment of a sealing element for a relatively large pipe;
- Fig. 4: illustrates a conical sealing element mounted in a conical sleeve;
- Fig. 5: is an elevational view of a hexagonal sealing element;
- Fig. 6: is a side view of the element of Fig. 5;
- Fig. 7: is a perspective view of the element of Fig. 5, and
- Fig. 8: is a perspective view of a bundle of hexagonal sealing elements.

### Detailed Description of Preferred Embodiments

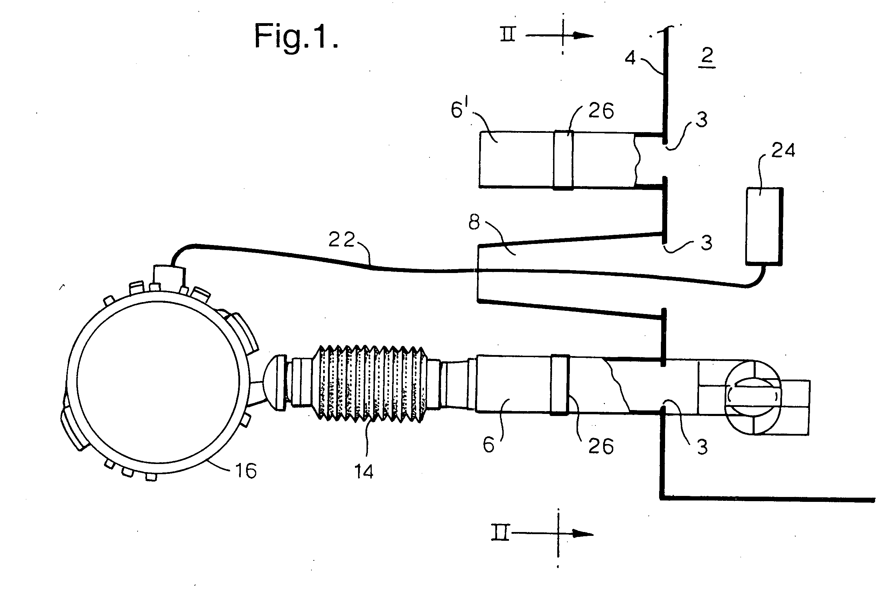

Referring now to the drawings, the schematic top view of Fig. 1 illustrates a protected space 2. Around holes 3 within vertical wall 4 of the space are tightly attached three sleeves 6, 6' and 8, made of a plastic laminate, advantageously the same laminate as that of which the wall to which they are attached is made. Sleeves 6, 6' are cylindrical and sleeve 8 is conical. The sleeves are attached to the wall by any conventional method, such as welding, gluing or sewing.

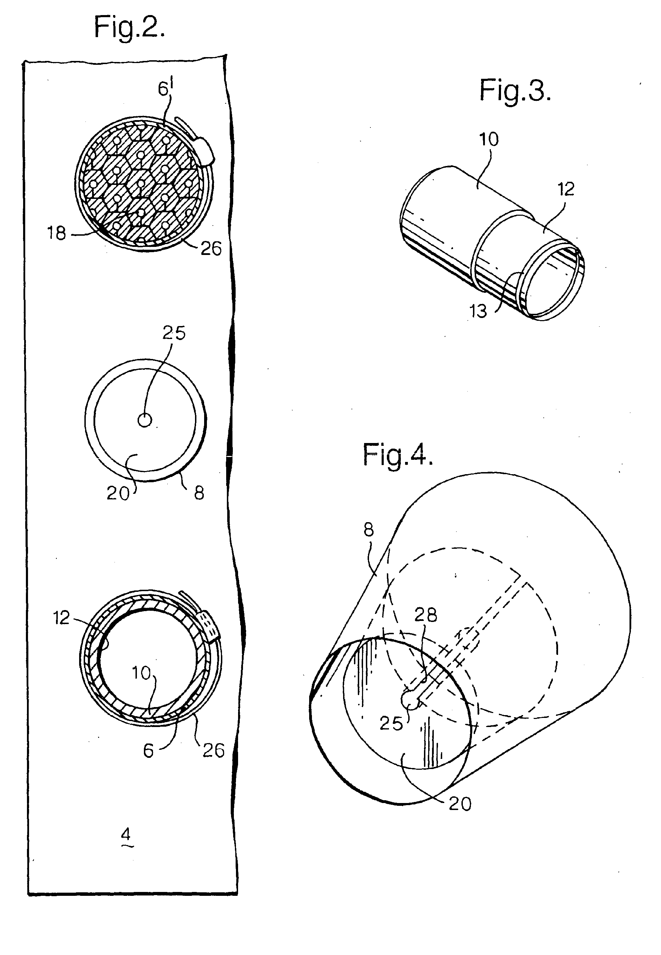

Each of the sleeves 6, 6', 8 accommodates at least one sealing element. Sleeve 6 may hold, by way of example, a cylindrical sealing element 10, such as that shown in Figs. 2 and 3. Element 10 houses a large pipe 12, to which the bellows 14 of a blower 16 is connected.

Sleeve 6', again by way of example, may house a bundle of polygonal, e.g., hexagonal, sealing elements 18, such as those shown in Figs. 2, 5 and 8. A plurality of cables of varying diameters is led through elements 18.

As can be seen in Fig. 1, sleeve 8 is conical and accommodates a conical sealing element 20, such as that shown in Figs. 2 and 4. The taper of conical sealing element 20 is obviously identical to the taper of conical sleeve 8, and is of the self-holding type. In the example shown in Fig. 1, sealing element 20 passes a cable 22, whereby a switch 24 inside the protected space 2 controls blower 16.

It should be noted that all of the cables, wires, pipes and tubes that are led through the various sealing elements into and out of the protected space 2, will be referred to hereinafter as "transfer means."

The various sealing elements are advantageously made of a foam-structured material, such as those certain types of polyurethane that pass the mustard gas penetration test: the sealing element must be resistant to mustard gas for more than one hour. Other suitable materials are natural or synthetic rubber. Whatever material is selected, it must be elastically deformable in compression.

Advantageously, the sealing elements are provided with a substantially axial bore 25, into which the transfer means can be inserted. As it is impossible to provide the sealing elements with bores exactly fitting every diameter, it is part of the present invention to provide means for applying a compressive force to sealing elements 6, 6' to seal off any clearance or interspaces between the transfer means and bore 25, as well as between the periphery of the sealing element and the inside surface of the sleeve. These means are in the form of straps or ties 26 seated on sleeves 6, 6', seen to better effect in Fig. 2. When the ties 26 are pulled tight, they exert the required compression force on the sealing element via the sleeves 6, 6'. It is good practice to provide each sleeve 6, 6' with two ties.

With regard to conical sleeve 8 and its conical sealing element 20, the means for applying the required compressive force is supplied by the conical shape of both sleeve 8 and sealing element 20: the more element 20 is pushed towards the narrower end of sleeve 8, the greater will be the compressive force exerted on sealing element 20. For this reason, conical sleeve 8 does not carry a tie 26. The tapers of element 20 and sleeve 8 are of the self-holding type.

Fig. 3 illustrates a cylindrical sealing element 10, such as would fit sleeve 6 of Fig. 1. Element 10 is seen to accommodate a relatively large pipe 12, the purpose of which has been mentioned above. In a dedicated sealing element of this type, it is possible to mold the element directly onto pipe 12. Also shown in Fig. 3 is a bead 13 rolled into the thin-walled pipe 12, which serves as a snap-in connector to bellows 14.

Fig. 4 illustrates a conical sealing element 20 inside conical sleeve 8. Element 20 has an axial bore 25 designed to accommodate, e.g., a cable 22 (Fig. 1). It is also seen that element 20 is provided with a slit 28 extending over its entire length and reaching into bore 25. This makes it easy to insert cable 22 by spreading open the elastically deformable sealing element 20, rather than threading the cable through bore 25, which would be impossible without disconnecting at least one of its terminals. It will be appreciated that for small-diameter transfer means, e.g., telephone wires or the like, the axial bore 25 could be dispensed with, as slit 28 could readily accommodate the wires and, after compression, seal off the element.

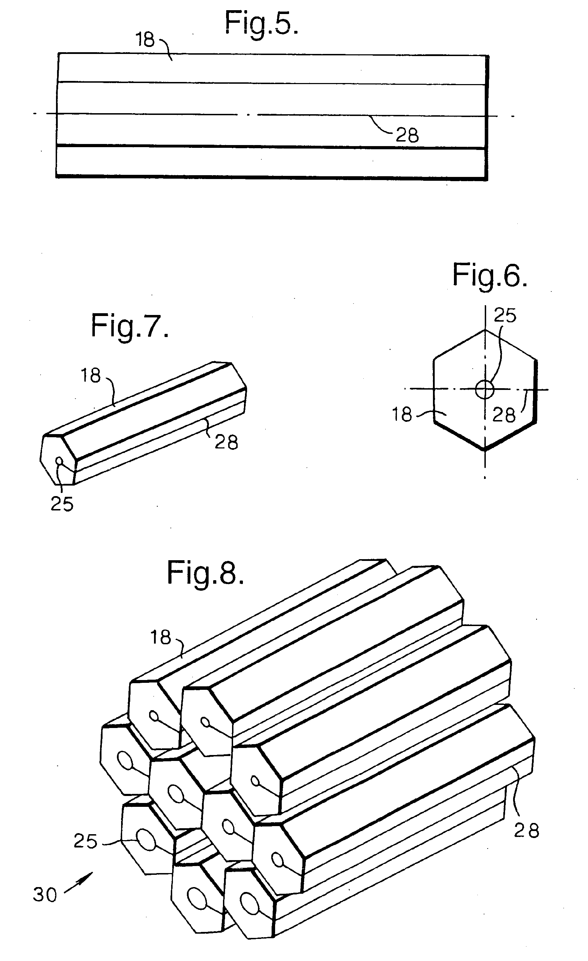

Figs. 5 to 7 depict a hexagonal sealing element 18. The side view of Fig. 6 shows bore 25, as well as slit 28. The hexagonal cross-section of the element facilitates the close packing of the transfer means, producing the bundles 30 clearly seen in Figs. 2 and 8 and leaving open only the peripheral interspaces between the outer elements and the inside surface of sleeve 6', which are sealed off by the compressive deformation produced by tie or ties 26.

As shown in Fig. 8, the sealing elements 18 constituting bundle 30 have bores 25 of differing sizes.

Obviously, it is also possible to use a cylindrical sealing element provided with an axial bore 25 and a slit 28 along its entire length, in analogy with hexagonal element 18.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A sealable lead-through system for a protected space defined by walls, said system comprising:
at least one sleeve made of a flexible material, one end of said sleeve being tightly attached to the outside of at least one of said walls;
at least one sealing element, at least approximately fitting said sleeve and being made of a material deformable in compression, said sealing element being provided with a bore at least approximately fitting the size of a transfer means intended to be led from outside said protected space into its interior or *vice-versa*;
said sealing element being adapted to be subjected to a compressive force, for sealing off any interspaces between said transfer means and said bore, and between said sealing element and said sleeve.

2. A sealable lead-through system for a protected space defined by walls, said system comprising:
at least one sleeve made of a flexible material, one end of said sleeve being tightly attached to the outside of at least one of said walls;
at least one sealing element, at least approximately fitting said sleeve and being made of a material deformable in compression, said sealing element being provided with a longitudinal slit extending along its entire length and reaching in depth to about the axis of said element, for accommodating a transfer means intended to be led from the outside of said protected space into its interior, or *vice-versa;*
said sealing element being adapted to be subjected to a compressive force, for sealing off any interspaces between said transfer means and said slit, and between said sealing element and said sleeve.

3. The system as claimed in claim 1 or claim 2, wherein said sealing element is substantially cylindrical.

4. The system as claimed in claim 1 or claim 2, wherein said sealing element is polygonal.

5. The system as claimed in claim 4, wherein said polygonal sealing element is hexagonal.

6. The system as claimed in claim 1 or claim 2, wherein said sealing element is conical.

7. The system as claimed in claim 1 or claim 2, wherein said sleeve is cylindrical.

8. The system as claimed in claim 6, wherein said sleeve is conical, the taper of said sleeve being substantially identical to the taper of said conical sealing element, said sleeve and said element being of the self-holding type.

9. The system as claimed in claim 8, wherein said conical sleeve is tightly attached to said wall at its wider end.

10. The system as claimed in claim 1, wherein said sealing element is provided with a longitudinal slit extending along its entire length and reaching in depth from the outside surface of said element into said bore.

11. The system as claimed in claim 1 and claim 2, wherein said sealing element is made of a material selected from the group including natural rubber, synthetic rubber, and polyurethane.

12. The system as claimed in claim 1 and claim 2, wherein said sealing element has a foam structure.

13. The system as claimed in claim 1 and claim 2, further comprising tie means mountable on said sleeve and adapted to exert a compressive force on said sealing element for sealing off the interspaces between said transfer means and said bore, and between said sealing element and said sleeve.
